Europäisches Patentamt

(19) European Patent Office    (11) Publication number: **0 126 833**

Office européen des brevets    **B1**

(12) EUROPEAN PATENT SPECIFICATION

(45) Date of publication of patent specification: **08.04.87**    (51) Int. Cl.⁴: **B 65 D 27/10, B 65 B 43/12**

(21) Application number: **83850144.3**

(22) Date of filing: **25.05.83**

(54) Device for dispensing plastic pockets to be applied to parcels.

(43) Date of publication of application:
**05.12.84 Bulletin 84/49**

(45) Publication of the grant of the patent:
**08.04.87 Bulletin 87/15**

(84) Designated Contracting States:
**AT BE CH DE FR GB IT LI NL SE**

(56) References cited:
**DE-A-2 753 451**
**FR-A-2 033 877**
**US-A-3 330 471**
**US-A-3 355 090**

(73) Proprietor: **Aktino Plast AB**
**Hanholmsvägen 41 M**
**S-602 22 Norrköping (SE)**

(72) Inventor: **Norberg, Georg Benzel**
**4 John Bergs Plan**
**S-112 50 Stockholm (SE)**

(74) Representative: **Onn, Thorsten et al**
**AB STOCKHOLMS PATENTBYRA Box 3129**
**S-103 62 Stockholm (SE)**

Courier Press, Leamington Spa, England.

## Description

This invention relates to a device for dispensing plastic pockets, said plastic pockets having an adhesive on one side and a protective paper over the adhesive and being intended to be applied to parcels and other packets after insertion of dispatch notes, packing lists, invoices, delivery notes, etc. and after removal of the protective paper.

When parcels are sent, distinction is made between two main types of dispatch, viz. joint sending and separate sending. In joint sending, dispatch notes and parcels are sent together, while in separate sending they are each sent individually. Separate sending is the oldest system and is usually carried out in such a way that there is a certain number on both the parcel and the dispatch note. The dispatch note is sent separately to the addressee and the parcel to the nearest post office, railway station or the like. The main disadvantage of this system is that the parcel and the dispatch note often do not reach their destination at the same time. One way of solving this problem is to use joint sending, in which the dispatch note is sent together with the parcel to the place of destination, from which the dispatch note is then sent to the addressee. The most common system is then to use a dispatch note which is attached to an underlying address label and adhered to the parcel. The dispatch note can then be detached and sent out. The disadvantage of the system is i.a. that the dispatch note must necessarily be made rather stiff so that it can be handled in mail delivery, which, however, creates difficulties in typewriting. In particular it is not possible to utilize the advantages in transcription of a great number of addresses with a data printer.

One way of solving this problem is to use plastic pockets which are adhered to the parcels. The dispatch notes are then inserted into these plastic envelopes. Moreover, other communications such as packing lists, invoices, delivery notes, etc can easily be inserted into the pockets. The plastic pockets consist of two plastic films which are cut to rectangles and welded together along three sides. One film is provided with an adhesive with an overlying protective paper. The plastic pockets are usually delivered as separate units or as a continuous web wherein the plastic pockets are separated by perforations made through both the plastic films and the protective paper. The plastic pockets can then be torn off these webs. Irrespective of the fact whether the plastic pockets are delivered as separate units or as continuous webs, it has turned out to be difficult to obtain an efficient handling of them i.a. because it is time-consuming and difficult to open them and to detach the protective paper. These problems are eliminated by the present invention, which makes possible an efficient handling of the plastic pockets.

According to the present invention, there is provided a device for dispensing plastic pockets having an adhesive on one side and being provided with protective paper over the adhesive, with their contents but without the protective paper. The characterizing features of the invention are apparent from claim 1 and will be described more in detail in connection with the enclosed figures.

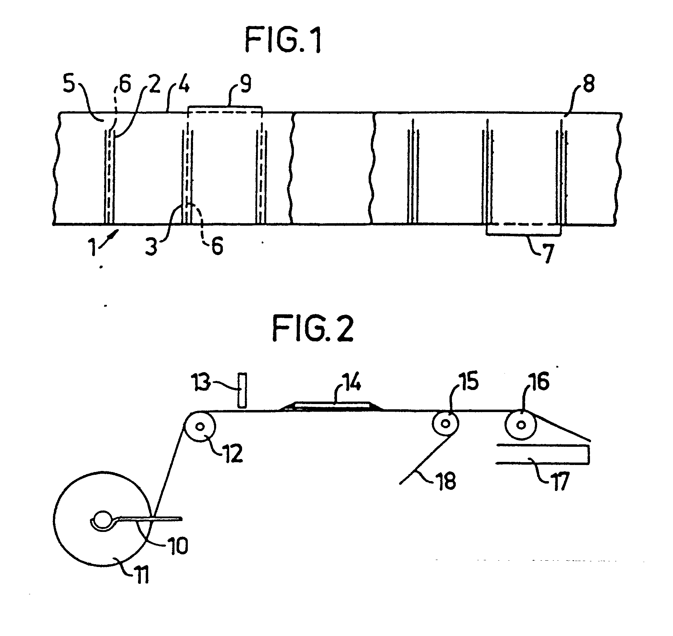

In Fig. 1 various embodiments of the plastic pockets are shown and Fig. 2 shows an embodiment of the device according to the invention.

In Fig. 1 a number of plastic pockets can be seen. The pockets consist of two plastic films which are welded together by means of a bottom weld 1 and two lateral welds 2, 3. One of the plastic films is provided with an adhesive on its outside and a protective paper on the adhesive layer. The plastic pockets are separated by perforations 6 going through the plastic films only but not through the protective paper. This is an essential characteristic feature of the invention. Previously known plastic pockets have been separated by perforations which also pass through the protective paper. One has then had to choose between two alternatives, either to have a very heavy perforation so that the plastic pockets only just hang together, or a very moderate perforation so that the plastic pockets are very strongly connected to each other. It is true that in the first case the plastic pockets can be easily separated from each other but as the protective paper is also perforated, there is a great risk that the pockets come loose from each other when this should not occur. This is a great problem if the pockets are to be fed forward by applying a tractive force and pulling out the web of pockets which is i.a. the case when the pockets are to be used in various dispensers, e.g. in the devices described in the present invention. In the other case, the pockets stick so firmly together that it is difficult to separate them from each other.

By instead only perforating the plastic films, it is achieved that the plastic pockets can be easily separated from each other by selecting a relatively heavy perforation and that the protective paper is not weakened at any point so that the pockets are not separated from each other at the wrong time. Instead of being perforated, the pockets may be completely severed from each other down to the protective paper except for a small section 8 at the open portion 4 of the pockets.

This can be regarded as an extremely heavy perforation. Irrespective of whether the pockets are entirely severed from each other or separated by the perforation 6, it is essential that the pockets are joined to each other with at least a small part at the apertures 4, so that a pocket can be opened by lifting the upper film at the edge of the pocket or, most preferably, by lifting the upper film of adjacent pockets. This is necessary because it must be easy to insert the dispatch notes and other communications to be kept in the pockets. In particular, this is necessary in order that the plastic pockets might be used in the devices according to the invention.

In order to make it still easier to open the pockets, the lateral welds do not reach right up to the open portion 4 but leave an unwelded length 5. This embodiment is also necessary in order that the pockets might be used in the devices according to the invention. Instead of letting the upper and the lower film have equal lengths at the opening 4 the upper film may be somewhat longer so that a piece 9 thereof projects. It is then sufficient that the upper films belonging to adjacent pockets are connected by this projecting piece, the lower film being completely cut through. Another embodiment of the pockets is that the upper plastic film projects somewhat 7 at the bottom so that a gripping tab is formed instead of the two films at the bottom having equal lengths. This will to a large extent facilitate removing the pockets from the protective paper when the process is carried out manually.

In Fig. 2 is shown a schematic view of a device according to the invention for dispensing the plastic pockets described above. A roll 11 with a number of plastic pockets on protective paper is placed in the holder 10.

The holder can be made in several ways but usually consists of a suspension device over which the roll with a bobbin and a through-going shaft can be hung, as is indicated in the figure. The roll is preferably provided with some type of brake. Various brakes are well-known in the art and as examples can be mentioned a braking system in which the plastic pockets with the protective paper pass between two braked rollers, or wherein a spring presses against the surface of the roll, or a band pressing against the roll as it is attached above the roll and hangs down with a weight around one side of the roll, and braking by a friction brake in the shaft of the roll. From the roll, the plastic pockets with protective paper pass over a breaker roller 12, by a sensor 13 via an opening device 14 to a roller 15, at which the protective paper is separated from the pockets. The pockets continue straight over the driven support roller 16 and the protective paper is received by a system of rollers, of which at least one is driven. Furthermore, there is a motor for driving the rollers and a switch for manually starting the driven rollers. The device functions in the following way. The pockets with protective paper are rolled off the roll 11 by the roller or rollers taking hold of the protective paper. This system of rollers can be embodied in several manners. In the simplest case it consists of only one roller which is driven and around which the protective paper is rolled. In another embodiment the paper is drawn between two rollers and can be torn off against a tearing edge. Many other embodiments are of course also possible and well-known in the art. What is important is that the driven roller or rollers included in the system like the support roller 16 can stop very quickly when the sensor 13 makes a signal that a plastic pocket is in the correct position and opened by the device 14.

This can be arranged in several ways. A very suitable method has been found to be in the use of a type of synchronous motor which in a currentless state exerts a locking momentum and which, moreover, stops very rapidly. The sensor 13 can also be designed in several ways and can for example consist of a microswitch which abuts against the upper plastic film and senses the perforation or the section between the pockets or specially made ridges or holes. Another possibility is to use a photocell sensing a printing on the film.

The plastic pockets with protective paper are passed from the roll via the roller 12 and the sensor 13 to the opening device 14. This device operates in such a way that the lower film with protective paper is held down against a support so that in the insertion of the dispatch notes and/or the other communications, the risk of these being placed under the pockets is eliminated. This part is in its simplest embodiment a planar portion which at some distance above the support enters the pocket to some extent so that between this portion and the support a space is formed, through which the lower film with protective paper is running. One condition of this is of course that the lateral welds of the pockets do not extend as far as to the open portion of the pockets. Another possibility is that the protective paper may project somewhat and that only the protective paper is fed in the space, in which case the lateral weld can extend farther out. However, it is a condition that the lateral weld does not extend to the edge in order that the pocket might be opened by the upper film being lifted. This is made in such a way that the opening device, in addition to the planar portion holding down the lower film and having a small thickness furthermore consists of two projections lifting the upper film so that the pocket is opened. The distance between these projections is selected such that the opening will be sufficiently wide and the height of the projections such that the opening becomes sufficiently high in order that the dispatch note and/or the other communications might easily be inserted into the pocket. As the upper plastic film is connected to the upper plastic film in adjacent pockets it is possible that only this portion of the upper film is lifted, the pocket being open throughout over its whole width without the lifting device obstructing the access.

Other opening devices known to one skilled in the art can also be used. Thus, such known devices can be used that inflate the opening of the pocket with compressed air or which lift the upper film by means of suction cups. What is essential is only that the pocket is opened over a sufficient width so that the intended contents might be introduced. The function of mechanically operating opening devices can of course also be controlled by signals from the sensor 13 so that the pocket is opened when it is in the correct position.

After a pocket has been provided with its contents, the driven rolls are started, preferably manually, by means of a switch until the next pocket is in position, the sensor 13 then again stopping the drive. The switch can be embodied in several ways but it is especially advantageous to use a relatively big touch control which need only be touched to start the drive. After providing the pockets with their contents, the protective paper is detached at the roller 15. Here the protective paper is drawn downwards at 18 and the pockets continue straight out across the support roller 16. In order that the pockets should not accompany the protective paper, it is necessary that the peripheral speed of the support roller is such that the pulling force on the separated pockets is sufficiently high to overcome the binding force of the adhesive to the protective paper. The velocity of the support roller must also be so high that the separated pockets, which thus have the adhesive layer against the roll, slip against the support roller and do not follow it all around by sticking onto it. The susceptibility to sticking can also be reduced by reducing the contact surface of the support roll, e.g. by grooves in the surface, or by suitable adhesion reducing surface of the support roll, e.g. of fluorine plastics.

In previously known devices for dispensing e.g. labels provided with adhesive and protective paper, only the roller 15 and not the support roller 16 has been used. As the label was made of relatively stiff material it continued straight out and the protective paper came loose by the bending around the roller 15. However, this is more difficult when relatively soft plastic pockets are used which are bent down and follow the protective paper. Moreover, the roller 16 makes possible a more secure separation of the protective paper irrespective of the stiffness of the label or pocket. In the use of the device according to the invention, the distance between the rollers 15 and 16 is adjusted such that when the machine stops by the sensor 13 giving off a signal a whole pocket hangs outside the roller 16 and additionally, a small portion of the following pocket. The first pocket can then be torn off and placed on the parcel. Before this is done the pocket can, however, be provided with a marking slip, such as an address note, on its underside (adhesive side). This is made possible by the holder 17 on which the marking slip is placed. The holder can be placed so close to the pocket that this is bent down by its own weight towards the holder so that the slip adheres, or a little further away from the pocket so that one has to press the pocket down against the marking slip. The use of the marking slip is a guarantee if the other papers should drop out of the pocket itself.

Regarding the background prior art in the field of this invention, US—A—3,330,471 and US—A—3,335,090 can be cited.

US—A—3,330,471 refers to a packing unit with a viewing window, adapted to contain a packing slip or the like and to be attached to an article for shipping. The units may be arranged in the form of a web wound into a roll. According to this patent, however, the units are to be separated from each other and the packing slips inserted by hand only, and nothing is mentioned about any apparatus for dispensing and filling the units.

US—A—3,355,090 refers to an envelope strip where the individual envelopes are adapted to contain packing slips or the like and to be attached to packages or the like by means of an adhesive. The envelopes are prepared from two piles in the form of continuous webs, one of them being provided with an adhesive layer protected by a release paper. The two webs are sealed to each other to form envelopes, which are subsequently separated from each other. Nothing is mentioned about any apparatus for dispensing and filling the envelopes, and only filling by hand is contemplated. This is underlined by the fact that the finished envelopes are separate from each other, and not in the form of a roll.

**Claims**

1. A device for dispensing plastic pockets to be applied to parcels and other packets after of dispatch notes and/or other communications in the pockets, said pockets being provided with an adhesive on one side and a protective paper over the adhesive and being arranged in the form of a continous web with the openings of the pockets arranged in the longitudinal direction of the web, the pockets being formed of two plastic films which are welded together by means of a bottom weld and two lateral welds which do not extend up to the openings of the pockets, so that a part is formed where the films are not welded together, and the pockets being separated by means of perforations which only pass through the plastic films but not through the protective paper, said device comprising

a holder (10) for a roll (11) of a web of a number of plastic pockets on a continous protective paper;

means (14) for opening the pockets for introducing the dispatch notes and/or other communications;

a breaker roller (12), over which the web of protective paper with the plastic pockets is running;

sensor means (13) for sensing the position of the pockets;

a separator roller (15) at which the protective paper (18); is separated from the pockets;

a driven device for feeding forward the protective paper; and

a driven support roller (16) for feeding forward the plastic pockets separated from the protective paper, the drive means of the support roller (16) giving this roller a peripheral speed such that a pulling force is applied to the separated pockets, said force being sufficiently high to separate the pockets from the protective paper, and that

starting and stopping of the pulling of the protective paper and the pockets separated therefrom is controlled by signals from the sensor means (13).

2. The device according to claim 1, characterized in that the roll (11) is braked and that the sensor means (13) control the pulling operation such that it stops when a pocket is opened by the opening means (14) and is situated before said means, after which the pulling operation can be restarted manually.

3. The device according to claim 1 or 2, characterized in that the opening means (14) is arranged such that it holds down the lower film and the protective paper but lifts the upper film such that the pocket is opened, whereby it is only in contact with the upper film at the edge of the pocket being opened, or only parts of the upper film associated with adjacent pockets.

**Patentansprüche**

1. Vorrichtung zur Behandlung von Kunstofftaschen die nach Einsführung Adresskarten und/oder anderer Meldungen an Paketen und anderen Verpackungen angebracht werden sollen, wobei die Taschen mit einem Klebstoff auf einer Seite und einem Schutzpapier über dem Klebstoff versehen, in der Form einer kontinuierlichen Bahn mit den Öffnungen der Taschen in der Längsrichtung der Bahn angeordnet und aus zwei Kunststoffilmen gebildet sind, die mittels einer Schweissnaht am Boden und zwei Schweissnähte an den Seiten aneinander befestigt sind, die sich nicht bis zu den Öffnungen der Taschen erstrecken, so dass ein Teil gebildet wird, wo die Filme nicht zusammengeschweisst sind, und die Taschen mittels Perforierungen separiert sind, die nur durch die Kunststoffilmen, nicht aber durch das Schutzpapier gehen, wobei die Anordnung folgendes umfasst:
   ein Halter (10) für eine Rolle (11) einer Bahn von einer Anzahl Kunststofftaschen auf einem kontinuierlichen Schutzpapier,
   Mittel (14) zur Öffnung der Taschen, um die Adresskarten und/oder Meldungen einzuführen,
   eine Umleitungsrolle (12), worüber die Bahn des Schutzpapiers mit den Kunststofftaschen läuft
   Abtastmittel (13) zur Abstastung der Lage der Taschen,
   eine Trennrolle (15), wo das Schutzpapier (18) von den Taschen separiert wird,
   eine getriebene Vorrichtung zum Vorschub des Schutzpapiers und
   eine getriebene Stützrolle (16) zum Vorschub der vom Schutzpapier separierten Kunststofftaschen, wobei die Antriebsvorrichtung der Stützrolle (16) dieser Rolle eine solche Peripheriegeschwindigkeit beibringt, dass eine Zugkraft an den separierten Taschen angebracht wird, wobei diese Kraft genug gross ist, um die Taschen vom Schutzpapier zu separieren, und dass
   Starten und stoppen des Ziehens vom Schutzpapier und den davon separierten Taschen durch Signale von der Abtastvorrichtung (13) kontrolliert werden.

2. Anordnung gemäss Anspruch 1, dadurch gekennzeichnet, dass die Rolle (11) gebremst wird und dass die Abtastmittel (13) den Ziehvorgang kontrollieren, so dass er stoppt, wenn eine Taschen vom Öffnungsmittel (14) geöffnet wird und vor dem erwähnten Mittel placiert ist, wonach der Ziehvorgang wieder manuell gestartet werden kann.

3. Anordnung gemäss Anspruch 1 oder 2, dadurch gekennzeichnet, dass das Öffnungsmittel (14) derart angeordnet ist, dass es den unteren Film und das Schutzpapier nach unten hält aber den oberen Film hebt, so dass die Tasche geöffnet wird, wodurch sie nur mit dem oberen Film an der Kante der geöffneten Tasche oder nur mit Teilen des mit den anschliessenden Taschen verbundenen oberen Films in Kontakt ist.

**Revendications**

1. Dispositif de distribution de pochettes en plastique destinées à être fixées sur des paquets et autres colis après insertion de bulletins d'expédition et/ou d'autres messages dans celles-ci, lesdites pochettes comportant sur l'une de leurs faces un adhésif recouvert d'un papier protecteur et étant disposées en forme d'une bande continue avec leurs ouvertures orientées dans le sens longitudinal de la bande, lesdites pochettes étant formées de deux feuilles en matière plastique assemblées au moyen d'une soudre inférieure et de deux soudures latérales qui ne s'étendent pas jusqu'aux ouvertures des pochettes, laissant une zone des feuilles libre de toute soudure, les pochettes étant séparées au moyen de perforations pratiquées dans les seules feuilles en plastique et laissant le papier protecteur intact, ledit dispositif comportant:
   — un support (10) d'un rouleau (11) d'une bande contenant une pluralité de pochettes en plastique disposées sur un papier protecteur continu;
   — des moyens (14) d'ouverture des pochettes en vue de l'insertion desdits bulletins d'expédition et/ou d'autres messages;
   — un rouleau-guide (12) sur lequel passe la bande de papier protecteur portant les pochettes en plastique;
   — des moyens (13) de détection de la position des pochettes;
   — un rouleau séparateur (15) permettant de séparer le papier protecteur (18) des pochettes;
   — un dispositif mené d'avance du papier protecteur; et
   — un roleau porteur mené (16) d'avance des pochettes en plastique séparées du papier protecteur, les moyens de commande du rouleau porteur (16) communiquant à celui-ci une vitesse périphérique faisant appliquer aux pochettes séparées une force de traction suffisante pour séparer les pochettes du papier protecteur;
   la marche et l'arrêt de la traction du papier protecteur et des pochettes en séparées étant commandés par des signaux émis par les moyens (13) de détection.

2. Dispositif selon la revendication 1, caractérisé en ce que le rouleau (11) est freiné et en ce que les moyens (13) de détection commandent l'opération de traction de manière à l'arrêter lorsqu'une pochette est ouverte par les moyens (14) d'ouverture et située devant ceux-ci, après quoi l'opération de traction peut être relancée manuellement.

3. Dispositif selon l'une des revendications 1 et 2, caractérisé en ce que les moyens (14) d'ouverture sont agencès de manière à maintenir en place la feuille inférieure et le papier protecteur, tout en soulevant la feuille supérieure, ouvrant ainsi la pochette et restant en contact avec la feuille supérieure aux bords seulement de la pochette ouverture, ou bien seulement avec des portions de la feuille supérieure des pochettes voisines.

# FIG.1

# FIG.2